# FASCICULE DE BREVET EUROPEEN

(11) **EP 2 161 590 B1**
(45) Date de publication et mention de la délivrance du brevet: **08.02.2012**
(21) Numéro de dépôt: 09169513.0
(22) Date de dépôt: 04.09.2009
(51) Int. Cl.: G01S 7/282, G01S 7/285, G01S 7/295, G01S 13/02, G01S 13/26

(54) **Synthétiseur pour émetteur/récepteur radar**
Synthesizer für Radar-Sender/Empfänger
Synthetizer for radar transmitter/receiver

(30) Priorité: 05.09.2008 FR 0804883
(43) Date de publication de la demande: 10.03.2010
(73) Titulaire: Thales, 92200 Neuilly Sur Seine (FR)
(72) Inventeur: Mathurin, Jean-Pierre, 78280 Guyancourt (FR); Mercier, Jérôme, 78370 Plaisir (FR)
(74) Mandataire: Lucas, Laurent Jacques

(56) Documents cités:
- EP-A- 1 083 673
- US-A1- 2004 235 444

## Description

L'invention porte sur les synthétiseurs numériques, en particulier les synthétiseurs numériques couplés à des émetteur/récepteur radar, par exemple les radar aéroportés.

Plus précisément, l'invention est particulièrement adaptée pour être utilisée au sein d'un radar aéroporté de surveillance et d'imagerie à très haute résolution distance, c'est-à-dire dont l'image produite permet d'avoir une précision de l'ordre de 15cm.

La bande des fréquences à émettre est par conséquent très large, généralement entre 10 à 15% de la fréquence d'émission. Par exemple, pour une fréquence d'émission de 15GHz, la largeur de bande doit généralement être comprise entre 1.5 et 2 GHz.

L'invention s'attache plus particulièrement à une famille de forme d'onde pouvant émettre cette bande : la bande instantanée, élaborée à l'aide d'une rampe de fréquence dans une impulsion.

La bande instantanée peut être générée en une seule fois au sein de l'impulsion, ou alors en sous-bandes successives au sein de plusieurs impulsions et couvrant la bande instantanée totale après n impulsions.

Les impulsions sont générées en numérique par modulation d'amplitude.

Deux canaux de fréquence sont couramment utilisés à savoir la bande X (environ 10 GHz) et la bande Ku (environ 15 GHz).

Pour ce faire, les synthétiseurs numériques actuels, comme pour exemple ceux décrites par US 2004/0235444 A1 et EP 1 083 673 A1, possèdent un générateur de formes d'onde comprenant un circuit programmable (par exemple un FPGA) couplé à deux convertisseurs numérique/analogique, fonctionnant en bande de base, en quadrature, pour réduire la bande de fréquence instantanée sur le convertisseur numérique analogique. Les deux signaux Q et I, en quadrature, sont mélangés par l'intermédiaire d'un mélangeur à bande latérale unique, couramment appelé BLU, puis une chaîne de traitement analogique effectue les différentes opérations (filtrage, amplification...).

Puis un commutateur délivre alternativement le signal issu de la chaîne de traitement vers un émetteur (signal d'émission) ou, après transposition par une valeur de fréquence intermédiaire radar appelée par la suite FI, vers un récepteur (onde locale) de façon à élaborer :
- d'une part le signal d'émission radar et,
- d'autre part le signal d'onde locale du récepteur nécessaire pour effectuer la réception des signaux radar renvoyés par le sol.

Ces deux signaux sont transmis via deux voies correspondantes : la voie d'émission et la voie de l'onde locale du récepteur.

L'élaboration de la bande instantanée par deux convertisseurs numérique/analogique en quadrature nécessite d'équilibrer parfaitement les signaux I et Q, en phase et en amplitude, qu'ils délivrent, afin d'obtenir la qualité spectrale souhaitée sur le signal reconstitué (élimination de la bande symétrique et de l'onde locale de transposition du BLU).

D'autre part, l'utilisation d'une même chaîne pour l'élaboration du signal destiné à la fois à l'émission et à la réalisation de l'onde locale de la réception nécessite une isolation importante au niveau des sorties du commutateur de façon à éviter les couplages des signaux mis en jeu lors de la réception et de l'émission.

Par ailleurs, le radar nécessite des moyens de calibration, de façon à compenser les retards différentiels des voies, les variations de phase et d'amplitude dans la bande de fréquence pour ses différents modes de fonctionnement.

La calibration nécessite de générer simultanément les signaux de forme d'onde sur la voie d'émission et la voie de l'onde locale.

Ces moyens de calibration comprennent un générateur de signaux supplémentaire et des commutateurs lui permettant de générer un signal, soit vers la voie d'émission, soit vers la voie de l'onde locale du récepteur, afin que l'ensemble des éléments du radar soient pris en compte lors de la calibration effectués par lesdits moyens.

Toutes ces contraintes impliquent une architecture particulièrement complexe du synthétiseur de fréquence et impliquent de nombreux réglages ou ajustements lors de la fabrication (ajustements de niveau de gain, réglages en température par exemple).

L'invention vise notamment à résoudre ces problèmes.

A cet effet, selon un premier aspect, il est proposé un synthétiseur couplé à un émetteur/récepteur de signaux radar, comprenant un générateur numérique de signaux ayant au moins deux sorties, chacune étant respectivement couplée à un premier et un deuxième convertisseur numérique/analogique apte respectivement à délivrer en sortie un premier et un deuxième signal impulsionnel.

Selon une caractéristique générale de ce premier aspect, les sorties du premier et du deuxième convertisseur numérique/analogique sont respectivement couplées à une première et à une deuxième chaîne de traitement analogique du premier et du deuxième signal impulsionnel, de façon à élaborer un signal d'émission à partir dudit premier signal impulsionnel, et un signal d'onde locale pour le récepteur, à l'aide dudit deuxième signal impulsionnel.

En d'autres termes, le signal d'onde locale du récepteur et le signal d'émission sont respectivement élaborés par une chaîne de traitement analogique qui leur est propre.

Ce premier aspect de l'invention permet de supprimer toute interdépendance entre les deux signaux mis en oeuvre par le système, tout en garantissant leur cohérence totale.

Selon un mode de réalisation, le signal d'émission et le signal d'onde locale du récepteur sont de préférence des signaux à très large bande.

De préférence, le premier et le deuxième convertisseur numérique/analogique sont configurés de façon qu'il existe un décalage fréquentiel Δf choisi entre le signal d'émission et le signal d'onde locale du récepteur.

Selon un mode de réalisation, chaque chaîne de traitement analogique peut comprendre :
- un moyen de transposition de fréquence, et
- au moins un multiplieur de fréquence, couplé en sortie du moyen de transposition.

De préférence la sortie de chaque moyen de transposition de fréquence et de chaque multiplieur de fréquence est couplée à un moyen de filtrage apte à filtrer des fréquences parasites.

Selon un mode de réalisation, le premier et le deuxième convertisseur numérique/analogique et les moyens de transposition peuvent être cadencés à l'aide de moyens de génération de signaux d'horloge formés à l'aide de boucle à verrouillage de phase.

En variante, le premier et le deuxième convertisseur numérique/analogique et les moyens de transposition peuvent être cadencés à l'aide de moyens de génération de signaux d'horloge formés à l'aide de moyens de synthèse analogique directe.

Cette variante a pour avantage d'être à très faible bruit, en particulier pour des fréquences comprises entre 1 kHz et 1 MHz.

De préférence, l'ensemble des moyens de génération peuvent être pilotés par un même oscillateur.

Selon un mode de réalisation le synthétiseur peut comprendre en outre des moyens de calibration formés à l'aide d'une boucle reliant la sortie de l'émetteur et l'entrée du récepteur.

En d'autres termes, l'architecture proposée permet une « auto-calibration » du système, sans aucun ajout de générateur supplémentaire. Cette « auto-calibration » est possible grâce à un rebouclage de l'émetteur sur le récepteur.

Selon un autre aspect de l'invention, il est proposé une utilisation d'un synthétiseur tel que décrit ci-avant, au sein d'un radar aéroporté d'imagerie à très haute résolution distance.

D'autres avantages et caractéristiques de l'invention apparaîtront à l'examen de la description détaillée d'un mode de réalisation d'un synthétiseur selon l'invention, nullement limitatif, et des dessins annexés sur lesquels :
- la figure 1 illustre un mode de réalisation d'un synthétiseur selon l'invention couplé avec un émetteur/récepteur d'un radar,
- la figure 2 illustre des signaux mis en oeuvre par un synthétiseur selon l'invention, et
- la figure 3 illustre un mode de réalisation d'un bloc de réception selon l'invention.

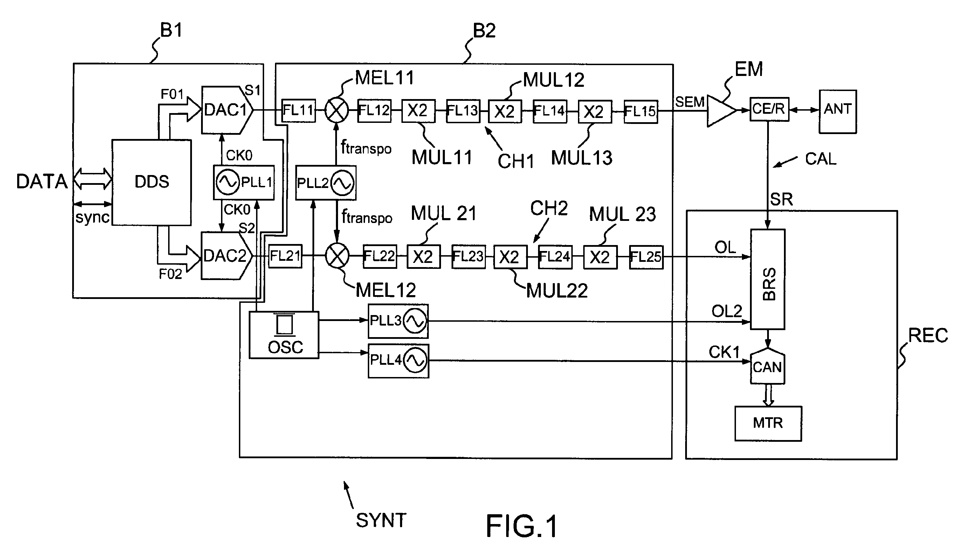

On se réfère à la figure 1.

Celle-ci illustre un mode de réalisation d'un synthétiseur SYNT, ici couplé à un émetteur EM et un récepteur REC. Par exemple ces émetteur EM et récepteur REC peuvent être utilisés au sein d'un radar aéroporté.

Plus précisément, ce synthétiseur SYNT est particulièrement adapté pour être utilisé par des radars aéroportés très large bande. On considère généralement qu'un radar est très large bande lorsque la bande des fréquences est comprise entre 10 à 15% de la fréquence d'émission maximale.

L'émetteur EM et le récepteur REC sont ici montés de façon classique.

L'émetteur EM reçoit le signal à émettre SEM, et l'amplifie de façon à pouvoir l'émettre.

La sortie de l'émetteur EM est reliée à une antenne ANT fonctionnant alternativement en émission et en réception, via un commutateur CE/R. Autrement dit, selon que l'antenne ANT fonctionne en émission ou en réception REC, le commutateur CE/R connecte l'antenne ANT à l'émetteur EM ou au récepteur REC.

La voie reliant le commutateur CE/R et le bloc de réception BRS forme les moyens de calibration CAL du synthétiseur SYNT.

La calibration du synthétiseur SYNT est effectuée en envoyant simultanément deux signaux de nature différente via chacune des deux voies formant le synthétiseur SYNT l'une arrivant sur le récepteur REC et l'autre sur l'émetteur EM.

Dans ce mode de réalisation, le récepteur REC comprend un bloc de réception de type superhétérodyne BRS bien connu de l'homme du métier. Celui-ci reçoit :
- le signal reçu SR par l'antenne ANT (c'est-à-dire le signal réémis par le sol suite à l'émission d'un signal radar),
- un signal appelé onde locale OL, apte à être mélangé au signal reçu SR, au sein du bloc de réception BRS, de façon à ramener la fréquence du signal reçu SR vers une fréquence intermédiaire plus facile à traiter, et
- un second signal d'onde locale OL2, permettant de ramener la fréquence intermédiaire du bloc de réception BRS à une fréquence plus basse, apte à être traitée par le convertisseur analogique/numérique qui suit.

Le signal délivré par le bloc de réception BRS est envoyé vers un convertisseur analogique numérique CAN cadencé par un autre signal d'horloge CK2, puis vers un moyen de traitement MTR apte à effectuer des opérations propres au radar considéré.

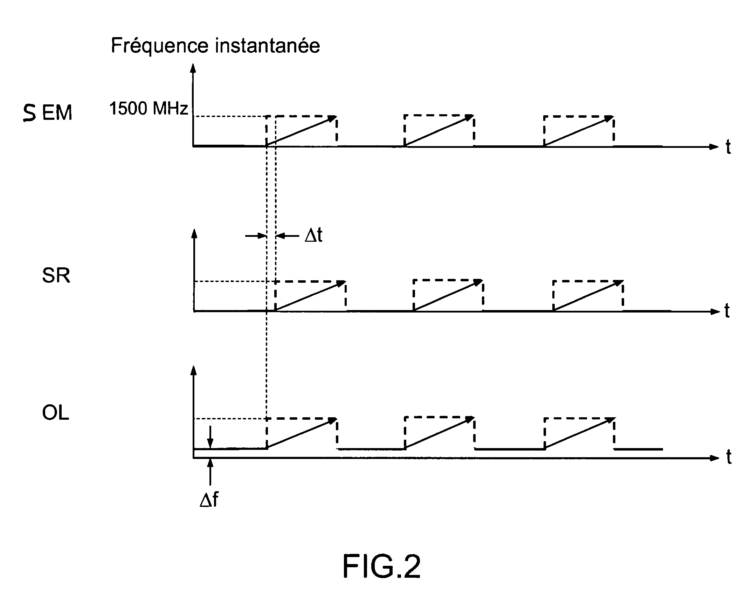

Les signaux SEM et OL mentionnés ci-dessus sont élaborés par le synthétiseur SYNT. La figure 2 illustre l'évolution de la fréquence instantanée pour chacun de ces signaux en fonction du temps t.

Les signaux SEM et OL, modulés linéairement en fréquence, sont de type impulsionnel. Au cours de chaque impulsion, une rampe est émise de façon à balayer toute une plage de fréquence, ici entre 0 et 1500MHz.

Un décalage fréquentiel Δf est inséré entre les deux signaux. Cet écart correspond à la première fréquence intermédiaire du récepteur REC. Celle-ci-sera développée plus en détail ci-après.

Le signal SR également représenté sur la figure 2, correspond au signal reçu par l'antenne après l'émission du signal d'émission EM. Il existe un décalage temporel Δt entre les deux signaux SR et SEM, cet écart étant lié au temps de trajet aller/retour du signal émis par l'antenne puis retourné par le sol.

On se réfère à nouveau à la figure 1 où va être décrit plus précisément le synthétiseur numérique SYNT. Le synthétiseur comporte deux blocs, l'un numérique B1 et l'autre analogique B2.

Le premier bloc B1 comprend un circuit logique appelé système de synthèse numérique directe référencé DDS. Par exemple, ce circuit logique peut être de type FPGA « Field Programmable Gate Array » en langue anglaise, bien connu de l'homme du métier.

Ce circuit DDS reçoit en entrée des données DATA de l'organe de gestion du radar (non représenté à des fins de simplifications).

Ces données DATA comprennent notamment les scénarii des formes d'ondes à générer et leurs caractéristiques, typiquement :
- le type de modulation (onde continue, rampe de fréquence linéaire ou non-linéaire,
- les paramètres des modulations non-linéaires: pas de variation, pente,
- l'agilité de fréquence (valeurs, pas de fréquence),
- la phase de démarrage,
- la bande de fréquence instantanée,
- la fréquence de répétition des impulsions,
- la durée des impulsions (ou la pente de fréquence).

La liaison de données DATA est bi-directive et est également utilisée pour transmettre des informations sur l'état de fonctionnement du synthétiseur numérique SYNT vers l'organe de gestion du radar (non représenté à des fins de simplification).

Le circuit DDS reçoit en outre un signal de synchronisation sync de démarrage pour le début du fonctionnement du synthétiseur numérique SYNT.

A partir de ces données DATA, le circuit DDS élabore deux formes d'onde FO1 et FO2 en direction de deux convertisseurs numérique/analogique DAC1 et DAC2.

A partir de la forme d'onde FO1, le convertisseur numérique/analogique DAC1 élabore un signal S1 ayant une fréquence f1. Ce signal sert à construire le signal d'émission SEM.

A partir de la forme d'onde FO2, le convertisseur numérique/analogique DAC2 élabore un signal S2 ayant une fréquence f2. Ce signal sert à construire l'onde locale OL.

Les deux convertisseurs numérique/analogique DAC1 et DAC2 sont configurés de façon qu'il y ait un écart de fréquence Δf/8 entre les signaux S1 et S2, l'écart Δf étant celui existant entre les signaux SEM et OL. Il vient donc f2=f1-Δf/8.

Les deux convertisseurs numérique/analogique DAC1 et DAC2 sont cadencés par le même signal d'horloge CK0 délivré par un moyen de génération de signaux d'horloge, ici une boucle à verrouillage de phase PLL1 pilotée par un oscillateur maître OSC.

En variante, le moyen de génération de signaux d'horloge (ainsi que ceux mentionnés par la suite) peut être un moyen de synthèse analogique direct, apte à recopier le bruit de l'oscillateur maître OSC dégradé du rapport existant entre les fréquences des signaux S1 et S2. Cette variante a pour avantage d'être à très faible bruit, en particulier pour des fréquences comprises entre 1 kHz et 1 MHz.

Le bloc B2 couplé en sortie du bloc B1 est un bloc de traitement analogique. Celui-ci est comprend notamment deux chaînes de traitement CH1 et CH2 qui sont ici identiques.

La chaîne de traitement CH1 est apte à traiter le signal S1 issu du convertisseur numérique/analogique DAC1, tandis que la chaîne de traitement CH2 est apte à traiter le signal S2 issu du convertisseur numérique/analogique DAC2.

La chaîne de traitement CH1 comprend tout d'abord un premier filtre FL11 (le filtre correspondant étant référencé FL21 pour la chaîne de traitement CH2).

Ce filtre FL11 a pour fonction de sélectionner une bande de fréquence de façon à éliminer des fréquences parasites. Le signal délivré en sortie du filtre FL11, occupe une bande de fréquence correspondant à 1/8ème de la bande de fréquence instantanée.

La sortie du filtre FL11 est couplée à un mélangeur MEL11 (MEL22 pour la chaîne CH2) apte à opérer une élévation en fréquence. La fréquence de transposition utilisée fₜᵣₐₙₛₚₒ est délivré ici par une boucle à verrouillage de phase PLL2, mais de même que pour les moyens de génération de signaux d'horloge, la boucle à verrouillage de phase peut être remplacée par un moyen de synthèse analogique direct.

A la sortie des mélangeurs MEL11 et MEL22, l'écart de fréquence entre les deux signaux en cours de traitement est toujours Δf/8.

Contrairement aux solutions antérieures qui proposent plusieurs transpositions en fréquence, celle opérée par les mélangeurs MEL11 et MEL22 est la seule pour toute la chaîne de traitement correspondante.

La sortie de mélangeur MEL11 (MEL22 pour la chaîne de traitement CH2) est suivie d'un filtre FL12 (FL22 pour la chaîne de traitement CH2) apte à éliminer les fréquences indésirables.

La chaîne CH1 comprend trois multiplieurs MUL11, MUL12 et MUL13 (respectivement MUL21, MUL22, et MUL23 pour la chaîne CH2) montés en cascade. Trois filtres FL13, FL14 et FL15 (respectivement FL23, FL24 et FL25 pour la chaîne CH2) sont couplés à la sortie de chaque multiplieur. Chaque filtre FL13, FL14, FL15, FL23, FL24 et FL25 a pour fonction de filtrer les fréquences indésirables, autrement appelées « fréquences sous-harmoniques et images » de la fréquence centrale de la plage de fréquence considérée.

Au final, à la sortie de chaque chaîne de traitement CH1 et CH2, la bande de fréquences des signaux S1 et S2 est multipliée par huit ; l'écart de fréquence entre ces deux signaux est alors de Δf.

Le filtre FL15 délivre en sortie le signal SEM vers l'émetteur EM.

Le filtre FL25 délivre l'onde locale OL au bloc de réception BRS. Ce dernier reçoit également un autre signal d'horloge OL2 généré par une autre boucle à verrouillage de phase PLL3. Le signal de sortie du bloc de réception BRS est délivré à un convertisseur analogique/numérique CAN qui génère un signal numérique vers des moyens de traitement MTR.

Le convertisseur analogique/numérique CAN est cadencé par un signal d'horloge CK1 délivré par une autre boucle à verrouillage de phase PLL4.

Les boucles à verrouillage de phase PLL3 et PLL4 sont contrôlées par l'oscillateur maître OSC.

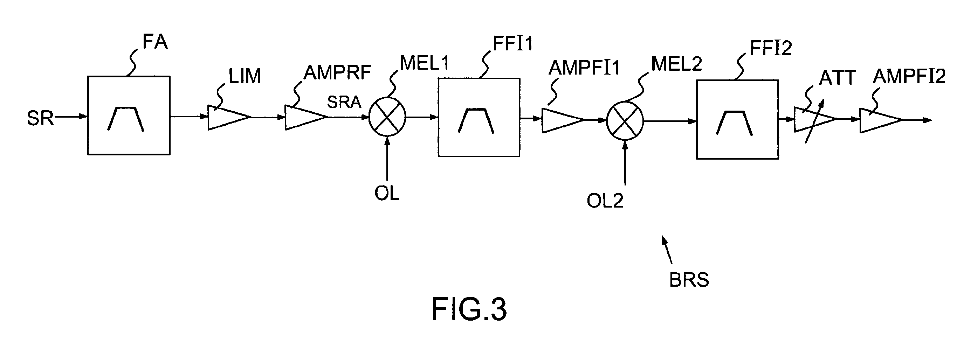

On se réfère à présent à la figure 3 qui illustre plus en détail un mode de réalisation du bloc de réception de type superhétérodyne BRS.

Celui-ci reçoit le signal reçu SR par l'antenne ANT, renvoyé par le sol en réponse au signal d'émission SEM.

Le signal SR est tout d'abord filtré par un filtre d'antenne FA, encore appelé présélecteur. Il est placé en amont d'un amplificateur radiofréquence AMPRF, de façon à éviter que ce dernier ne sature en raison de signaux localisés hors de la bande utile.

Le filtre d'antenne FA est suivi d'un limiteur LIM, permettant de protéger les éléments du récepteur REC contre les signaux à niveau très élevé, ces derniers pouvant avoir un effet saturant, voire destructif sur le récepteur REC.

L'amplificateur radiofréquence AMPRF est de préférence un amplificateur de type « faible bruit » (« LNA » pour « low noise amplifier » en langue anglaise). Il est conçu de façon à obtenir le meilleur rapport signal à bruit. Il délivre en sortie un signal correspondant au signal reçu amplifié référencé SRA.

Un mélangeur MEL1 est connecté en sortie de l'amplificateur AMPRF. Celui-ci reçoit également en entrée l'onde locale OL. Sont délivrés en sortie le signal SRA, le signal OL, un signal égal à SRA+OL et un autre signal correspondant à |*SRA*-*OL*| c'est-à-dire l'écart de fréquence Δf mentionné ci-avant. Ce dernier signal |*SRA*-*OL*| correspond à la première fréquence intermédiaire du récepteur REC mentionnée ci-avant, désignée par la référence FI1 par la suite.

Les signaux indésirables issus du mélangeur MEL1 sont filtrés par un filtre à fréquence intermédiaire FFI1. Ce dernier filtre également les fréquences indésirables proches de FI1.

Ce filtre FFI1 est suivi d'un amplificateur AMPFI1, qui permet d'amener les signaux reçus SR dans la plage de fonctionnement du convertisseur analogique/numérique CAN, couplé en sortie du bloc de réception BRS.

La valeur de la première fréquence intermédiaire FI1 est relativement élevée, par exemple de l'ordre de 3 GHz (correspondant à 2 fois la bande de fonctionnement de façon garantir les capacités de filtrage des fréquences indésirables, de type repliement par exemple, « aliasing » en langue anglaise).

Une deuxième fréquence intermédiaire correspondant au signal OL2 est alors délivrée à un autre mélangeur MEL2 de façon à opérer une autre transposition de fréquence, à une fréquence plus par exemple 600 MHz. Le mélangeur MEL2 est également suivi d'un deuxième filtre à fréquence intermédiaire FFI2 de façon à filtrer les fréquences indésirables générées par le mélangeur MEL2.

Ce filtre est suivi d'un atténuateur ATT variable programmable permettant d'ajuster les niveaux de signaux par rapport à la dynamique du convertisseur analogique/numérique CAN et d'effectuer les corrections de variation de gain du bloc de réception BRS.

Enfin, un amplificateur de sortie AMPFI2 amplifie le signal issu deuxième filtre à fréquence intermédiaire FFI2. Ce dernier amplificateur AMPFI2 positionne le niveau du signal dans la plage de fonctionnement du convertisseur analogique/numérique CAN qui suit. La fréquence d'échantillonnage de ce convertisseur CAN est donnée par le signal d'horloge CK1 et peut être de 4/3 de la valeur de la fréquence intermédiaire du deuxième filtre FFI2.

## Revendications

1. Synthétiseur apte à être couplé à un émetteur (EM) et à un récepteur (REC) de signaux radar, comprenant un générateur numérique de signaux ayant au moins deux sorties, chacune étant respectivement couplée à un premier et un deuxième convertisseur numérique/analogique (DAC1, DAC2) apte respectivement à délivrer en sortie un premier et un deuxième signal impulsionnel (S1, S2), **caractérisé par le fait que** les sorties du premier et du deuxième convertisseur numérique/analogique (DAC1, DAC2) sont respectivement couplées à une première et à une deuxième chaîne de traitement analogique (CH1, CH2) du premier et du deuxième signal impulsionnel, de façon à élaborer respectivement un signal d'émission (SEM) à partir dudit premier signal impulsionnel, et un signal d'onde locale pour le récepteur (REC), à partir dudit deuxième signal impulsionnel,
ladit première chaîne (CH1) comportant un moyen de transposition de fréquence (MEL11) dudit premier signal et au moins un multiplieur de fréquence (MUL11, MUL12, MUL13),
ladite deuxième chaîne (CH2) comportant un moyen de transposition de fréquence (MEL12) dudit deuxième signal et au moins un multiplieur de fréquence (MUL21, MUL22, MUL23,
le premier et le deuxième convertisseur numérique/analogique étant configurés de façon qu'il existe un décalage fréquentiel Δf choisi entre le signal d'émission (SEM) et le signal d'onde locale du récepteur (OL).

2. Synthétiseur selon la revendication précédente, dans lequel le signal d'émission (SEM) et le signal d'onde locale du récepteur (OL) sont des signaux à très large bande.

3. Synthétiseur selon l'une quelconque des revendications précédentes, dans lequel la sortie de chaque moyen de transposition de fréquence et de chaque multiplieur de fréquence est couplée à un moyen de filtrage (FL12, FL13, FL14, FL15, (FL22, FL23, FL24, FL25) apte à filtrer des fréquences parasites.

4. Synthétiseur selon la revendication 3, dans lequel le premier et le deuxième convertisseur numérique/analogique et les moyens de transposition sont cadencés à l'aide de moyens de génération de signaux d'horloge (PLL1, PLL2, PLL3, PLL4) formés à l'aide de boucle à verrouillage de phase.

5. Synthétiseur selon l'une quelconque des revendications 3 ou 4, dans lequel le premier et le deuxième convertisseur numérique/analogique et les moyens de transposition sont cadencés à l'aide de moyens de génération de signaux d'horloge formés à l'aide de moyens de synthèse analogique directe.

6. Synthétiseur selon l'une quelconque des revendications 4 ou 5, dans lequel l'ensemble des moyens de génération sont pilotés par un même oscillateur (OSC).

7. Synthétiseur selon l'une des revendications précédentes, comprenant en outre des moyens de calibration (CAL) formés à l'aide d'une boucle reliant la sortie de l'émetteur (EM) et l'entrée du récepteur (REC).

8. Utilisation d'un synthétiseur selon l'une quelconque des revendications précédentes au sein d'un radar aéroporté d'imagerie à très haute résolution distance.

## Claims

1. A synthesiser designed to be coupled to an emitter (EM) and a receiver (REC) of radar signals, comprising a digital generator of signals, which generator has at least two outputs, each output being respectively coupled to a first and a second digital/analogue converter (DAC1, DAC2) respectively designed to deliver a first and a second pulse signal (S1, S2) as the output, **characterised in that** the outputs of the first and second digital/analogue converters (DAC1, DAC2) are respectively coupled to a first and a second chain (CH1, CH2) for analogue processing of the first and second pulse signals so as to develop an emission signal (SEM) on the basis of said first pulse signal and a local wave signal for the receiver (REC) on the basis of said second pulse signal, respectively,
said first chain (CH1) comprising means for frequency translation (MEL11) of said first signal and at least one frequency multiplier (MUL11, MUL12, MUL13),
said second chain (CH2) comprising means for frequency translation (MEL12) of said second signal and at least one frequency multiplier (MUL21, MUL22, MUL23),
the first and the second digital/analogue converters being configured so that a frequency shift Δf exists that is selected between the emission signal (SEM) and the local wave signal of the receiver (OL).

2. The synthesiser according to the preceding claim, wherein the emission signal (SEM) and the local wave signal of the receiver (OL) are ultrawide-band signals.

3. The synthesiser according to any one of the preceding claims, wherein the output of each frequency translation means and of each frequency multiplier is coupled to filtering means (FL12, FL13, FL14, FL15, FL22, FL23, FL24, FL25) designed to filter harmful frequencies.

4. The synthesiser according to claim 3, wherein the first and the second digital/analogue converters and the translation means are clocked using means for generating clock signals (PLL1, PLL2, PLL3, PLL4) that are formed using a phase locked loop.

5. The synthesiser according to claim 3 or 4, wherein the first and the second digital/analogue converters and the translation means are clocked using means for generating clock signals that are formed using means for direct analogue synthesis.

6. The synthesiser according to claim 4 or 5, wherein all of the generation means are controlled by the same oscillator (OSC).

7. The synthesiser according to any one of the preceding claims, further comprising calibrations means (CAL) that are formed using a loop that links the output of the emitter (EM) and the input of the receiver (REC).

8. The use of a synthesiser according to any one of the preceding claims within an airborne radar for remote very high resolution imagery.

## Patentansprüche

1. Synthesiser zum Koppeln mit einem Sender (EM) und einem Empfänger (REC) von Radarsignalen, der einen digitalen Signalgenerator mit wenigstens zwei Ausgängen umfasst, wobei jeder Ausgang jeweils mit einem ersten und einem zweiten Digital-Analog-Wandler (DAC1, DAC2) gekoppelt ist, die jeweils ein erstes und ein zweites Impulssignal (S1, S2) als Ausgang erzeugen können, **dadurch gekennzeichnet, dass** die Ausgänge des ersten und zweiten Digital-Analog-Wandlers (DAC1, DAC2) jeweils mit einer ersten und einer zweiten Analogverarbeitungskette (CH1, CH2) des ersten und zweiten Impulssignals gekoppelt sind, um jeweils ein Sendesignal (SEM) auf der Basis des ersten Impulssignals und ein lokales Wellensignal für den Empfänger (REC) auf der Basis des zweiten Impulssignals zu entwickeln,
wobei die erste Kette (CH1) ein Mittel zur Frequenzumsetzung (MEL11) des ersten Signals und wenigstens einen Frequenzvervielfacher (MUL11, MUL12, MUL13) umfasst,
wobei die zweite Kette (CH2) ein Mittel zur Frequenzumsetzung (MEL12) des zweiten Signals und wenigstens einen Frequenzvervielfacher (MUL21, MUL22, MUL23) umfasst,
wobei der erste und der zweite Digital-Analog-Wandler so konfiguriert sind, dass eine Frequenzverschiebung Δf vorliegt, die zwischen dem Sendesignal (SEM) und dem lokalen Wellensignal des Empfängers (OL) ausgewählt ist.

2. Synthesiser nach dem vorherigen Anspruch, wobei das Sendesignal (SEM) und das lokale Wellensignal des Empfängers (OL) Ultrabreitbandsignale sind.

3. Synthesiser nach einem der vorherigen Ansprüche, wobei der Ausgang jedes Frequenzumsetzungsmittels und jedes Frequenzvervielfachers mit einem Filtermittel (FL12, FL13, FL14, FL15, FL22, FL23, FL24, FL25) zum Ausfiltern von Störfrequenzen gekoppelt ist.

4. Synthesiser nach Anspruch 3, wobei der erste und der zweite Digital-Analog-Wandler und die Umsetzmittel mit Taktsignalerzeugungsmitteln (PLL1, PLL2, PLL3, PLL4) getaktet werden, die mit einem Phasenregelkreis gebildet werden.

5. Synthesiser nach Anspruch 3 oder 4, wobei der erste und der zweite Digital-Analog-Wandler und die Umsetzmittel mit Taktsignalerzeugungsmitteln getaktet werden, die mit direkten Analogsynthesemitteln gebildet werden.

6. Synthesiser nach Anspruch 4 oder 5, wobei alle Erzeugungsmittel mit demselben Oszillator (OSC) gesteuert werden.

7. Synthesiser nach einem der vorherigen Ansprüche, der ferner Kalibrierungsmittel (CAL) umfasst, die mit einer Schleife gebildet werden, die den Ausgang des Senders (EM) und den Eingang des Empfängers (REC) verbindet.

8. Verwendung eines Synthesisers nach einem der vorherigen Ansprüche in einem Luftradar für eine Fernbilderzeugung mit sehr hoher Auflösung.
